# EUROPÄISCHE PATENTSCHRIFT

(11) **EP 1 811 264 B1**
(45) Veröffentlichungstag und Bekanntmachung des Hinweises auf die Patenterteilung: **30.11.2011**
(21) Anmeldenummer: 07100704.1
(22) Anmeldetag: 17.01.2007
(51) Int. Cl.: G01B 7/34, A61C 19/04, G01H 1/00, G01N 29/12

(54) **Verfahren zur Erkennung von dentalen Oberflächenstrukturen**
Method for recognising dental surface structures
Procédé destiné à la détection de structures de surfaces dentaires

(30) Priorität: 18.01.2006 DE 102006002616
(43) Veröffentlichungstag der Anmeldung: 25.07.2007
(73) Patentinhaber: Sirona Dental Systems GmbH, 64625 Bensheim (DE)
(72) Erfinder: Oehme, Bernd, 55128, Mainz (DE); Sutter, Ralf, 69469, Weinheim (DE); Strackeljan, Jens, Prof. Dr., 39114 Magdeburg (DE); Behr, Dietrich, Prof. Dr., 38678 Clausthal-Zellerfeld (DE)
(74) Vertreter: Sommer, Peter

(56) Entgegenhaltungen:
- WO-A-98/01736
- DE-C2- 4 304 170
- JP-A- 9 276 300
- JP-A- 2003 116 890

## Beschreibung

### Technisches Gebiet

Die Erfindung betrifft ein Verfahren zur Erkennung von Oberflächenstrukturen, bei dem ein Detektorelement mit der zu erkennenden dentalen Oberfläche in Kontakt gebracht wird und bei dem ein Sensorelement zur Erfassung von Schwingungen mit dem Detektorelement verbunden ist.

### Stand der Technik

Aus der DE 43 04 170 C2 ist ein derartiges gattungsgemäßes Verfahren sowie eine Vorrichtung bekannt, bei dem das Detektorelement bei Erregung mit einem piezokeramischen oder magnetostriktiven Schwingerreger Schwingungen ausführt. Der Schwingerreger erteilt dem Detektorelement einen Schwingungsimpuls und es erfolgt eine Auswertung des Schwingungsverhaltens des Detektorelements nach dem Schwingungsimpuls. Das Verhalten des Detektorelements ist dabei abhängig von der mit dem Detektorelement berührten Oberfläche.

Nachteilig ist daran, dass eine Anregung notwendig ist. Dies führt zu erhöhten Kosten und es hat sich gezeigt, dass die Streuungen des Anregesystems das Schwingungsverhalten des Detektorelements derart beeinträchtigen, dass Korrekturmaßnahmen bei der Auswertung erforderlich sind. Darüber hinaus wird zur Erzeugung des Schwingungsimpulses ein Hochspannungssignal verwendet. Dies kann zu Schwierigkeiten im Auswerteprozess führen.

Aus der JP09276300 A1 ist ein System zur Bestimmung der Rauhigkeit einer Zahnwurzeloberfläche bekannt, in welchem eine Mikrofon benutzt wird, mit welchem die Schwingungsamplitude einer Sonde erfasst wird, wenn die Sonde an der Zahnwurzeloberfläche vorbeigefügt wird.

### Darstellung der Erfindung

Bei dem erfindungsgemäßen Verfahren zur Erkennung von dentalen Oberflächenstrukturen wird das Detektorelement mit der zu erkennenden Oberfläche des Zahnes in Kontakt gebracht, wobei ein Sensorelement zur Erfassung von von der Oberflächenstruktur des Zahnes abhängigen Schwingungen mit dem Detektorelement verbunden ist, anschließend die Schwingungen des Detektorelements erfasst und ausgewertet, indem das Detektorelement mit oder ohne geräteseitige Anregung über die zu erkennende Oberfläche des Zahns bewegt wird und die dabei entstehenden Schwingungen des Detektorelements erfasst und die nicht durch die geräteseitige Anregung hervorgerufenen Schwingungen ausgewertet werden.

Unter nicht durch die geräteseitige Anregung hervorgerufenen Schwingungen werden solche Schwingungen verstanden, die durch die Oberfläche des Zahns selbst angeregt werden. Diese Schwingungen können auch einer geräteseitigen Anregung aufmoduliert sein.

Vorteilhafterweise werden zusätzlich die durch geräteseitige Anregung hervorgerufenen Schwingungen des Detektorelements ausgewertet. Dies ermöglicht einen Abgleich der beiden aus den unterschiedlichen Anregungsarten gewonnenen Ergebnissen und trägt so zu einer weitergehenden Analyse bei.

Vorteilhafterweise werden die Schwingungen des Detektorelements in einem geräteseitig anregungsfreien Zeitbereich ausgewertet. In einem solchen Zeitbereich werden die Schwingungen einzig von der überstrichenen Oberfläche hervorgerufen.

Vorteilhafterweise weisen die geräteseitig hervorgerufenen Schwingungen in dem auszuwertenden Signal des Detektorelements mindestens die 10-fache Amplitude gegenüber der Amplitude der nicht durch die geräteseitige Anregung hervorgerufenen Schwingungen auf. Damit ist für die Auswertung eine klare Trennung der beiden Bereiche möglich. Typischerweise haben die geräteseitigen Anregungen eine Amplitude in der Größenordnung von 2 V und das durch die Oberfläche hervorgerufene Signal eine Amplitude in der Größenordnung von 2 mV.

Vorteilhafterweise wird das aus der Anregung gewonnene Signal im Zeitbereich und/oder im Frequenzbereich ausgewertet.

Vorteilhafterweise werden zur Erzeugung auswertbarer Signale ein piezokeramischer oder magnetostriktiver Schwingerreger als Sensorelement und/oder Sensoren wie Schwingungsaufnehmer oder Dehnungsmessstreifen verwendet.

Das Verfahren eignet sich insbesondere zur Erkennung von Oberflächenstrukturen von Zahnsubstanz.

Eine nicht-beanspruchte Vorrichtung zur Erkennung von dentalen Oberflächenstrukturen umfasst ein Detektorelement, welches Schwingungen ausführen kann, weiterhin ein Sensorelement zur Erfassung der Schwingungen des Detektorelements bei Wechselwirkung mit einer zu erkennenden Oberfläche des Zahns sowie eine mit dem Sensorelement verbundene Auswerteeinheit zur Auswertung der aus den Schwingungen des Detektorelements gewonnenen Signale. Das Sensorelement ist so ausgebildet, dass die Schwingungen, die beim Bewegen des nicht geräteseitig angeregten Detektorelements über die Oberfläche hervorgerufen werden, auswertbar sind.

Das vorgeschlagene Verfahren und die zugehörige Vorrichtung nutzen aus, dass beim Überstreichen einer Oberfläche mit einem Detektorelement, beispielsweise mit dem distalen Ende einer Werkzeugspitze eines piezo- oder magnetostriktiv getriebenen Ultraschallscalers, aufgrund der Schwingungen während der Bewegung in einem Sensorelement ein Signal erzeugt wird, z.B. durch den reziproken piezoelektrischen Effekt. Mit Hilfe dieses Signals kann entschieden werden, ob sich das Detektorelement auf einer Oberfläche befindet und es können unterschiedliche Oberflächen voneinander unterschieden werden, wenn bei einer Auswerteeinrichtung eine entsprechende Anlernung erfolgte.

Dadurch, dass das Verfahren mit dem Signal arbeitet, welches durch die Bewegung des Detektorelements über die Oberfläche entsteht, werden keine Vorrichtungen zur Anregung des Detektorelements benötigt. Versuche haben gezeigt, dass das System sowohl verschiedene Topologien und Rauigkeiten unterscheiden als auch durch geeignete Auswertung Oberflächen aufgrund Ihrer Materialeigenschaften trennen kann. Als Materialeigenschaften kommen unter anderem in Frage der Elastizitätsmodul, die Materialhärte und die Schallgeschwindigkeit in dem Material.

Da auf Vorrichtungen zur Anregung des Detektorelements verzichtet werden kann, spielen die Streuungen des Anregesystems keine Rolle mehr und die Auswertung hängt allein von der Oberfläche ab. Herstellungsbestimmte Schwankungen in der Übertragungskette von der Oberfläche bis zur Signalerzeugung im Sensorelement sind so gering, dass Sie vernachlässigbar sind.

Vorteilhafterweise werden die durch die Bewegung des Detektorelements über die zu erkennende Oberfläche des Zahns entstehenden Schwingungen des Detektorelements in einem Zeitbereich mit geräteseitiger Anregung ausgewertet. Dies ist durch die größenordnungsmäßige Trennung der aus den unterschiedlichen Anregungen stammenden Signalhöhen möglich und beugt bei verschiedenen Meßmethoden Schwierigkeiten durch Unterbrechungen vor.

Erfindungsgemäß werden die durch die Bewegung des Detektorelements über die zu erkennende Oberfläche des Zahns entstehenden Schwingungen des Detektorelements und die durch geräteseitige Anregung hervorgerufenenen Schwingungen gleichzeitig ausgewertet. Dies ermöglicht den direkten zeitgleichen Vergleich der Ergebnisse beider Auswertungen.

Das Signal kann entweder im Zeitbereich oder auch im Frequenzbereich durch geeignete Auswertealgorithmen untersucht werden.

Als Sensorelement können als Antrieb eines Ultraschallscalers vorhandene piezo- oder magnetostriktive Sensorelemente vorgesehen werden, darüber hinaus können auch Sensorelemente wie Schwingungsaufnehmer oder Dehnungsmessstreifen verwendet werden.

### Kurze Beschreibung der Zeichnungen

In der Zeichnung sind Ausführungsbeispiele der Erfindung dargestellt. Es zeigt:
- Fig. 1A: einen Ultraschallscaler mit einem Sensorelement in Form einer Piezokeramik, die
- Fig. 1B: einen Ultraschallscaler mit einem Aktor- und einem Sensorelement in Form von Piezokeramiken, die
- Fig. 2A: einen Ultraschallscaler mit einem mit einer Auswerteeinheit verbundenen separaten Schwingungssensor in einer ersten Anordnung, die
- Fig. 2B: einen Ultraschallscaler mit einem mit einer Auswerteeinheit verbundenen separaten Schwingungssensor in einer weiteren Anordnung, die
- Fig. 3: einen Ultraschallscaler mit einem Schwingungssensor in Form eines Dehnungsmessstreifens, die
- Fig. 4: eine beispielhafte Signalform und die
- Fig. 5: eine weitere beispielhafte Signalform.

### Ausführungsbeispiele der Erfindung

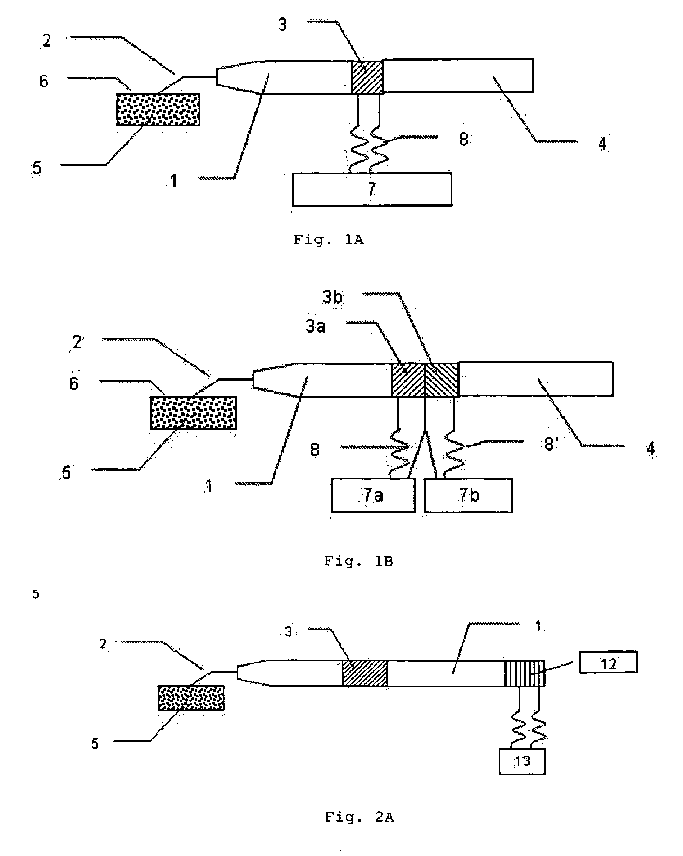

In **Fig. 1A** ist ein Handinstrument 1 in Form eines Ultraschallscalers als Beispiel einer Vorrichtung zur Erkennung von Oberflächenstrukturen dargestellt. Dieses zahnärztliche Handinstrument 1 umfasst eine Arbeitsspitze 2, welche mittels einer Piezokeramik 3 in Schwingungen versetzt wird. Um die Reaktionskräfte aufzunehmen, ist im Handinstrument eine Gegenmasse 4 vorgesehen. Derartige Ultraschallscaler sind aus dem Stand der Technik bekannt. Mit der Arbeitsspitze 2 als Werkzeug lässt sich von einem Zahn 5 von der Oberseite 6 her Material abtragen. Die Arbeitsspitze 2 lässt sich darüber hinaus als Detektorelement verwenden.

In dem ersten Ausführungsbeispiel dient die Piezokeramik 3 als Sensorelement zur Erfassung der Schwingungen des Detektorelements, wenn dieses ohne zusätzlich angeregt zu werden über die Oberfläche 6 des Zahns 5 bewegt wird. Es handelt sich hierbei um ein Überstreichen, ein Materialabtrag ist in diesem Betriebszustand nicht beabsichtigt. Gegebenenfalls kann das durch das Überstreichen gewonnene Signal nach einer entsprechenden Auswertung zur Leistungssteuerung des Schwingerregers und damit zum Abtragen genutzt werden.

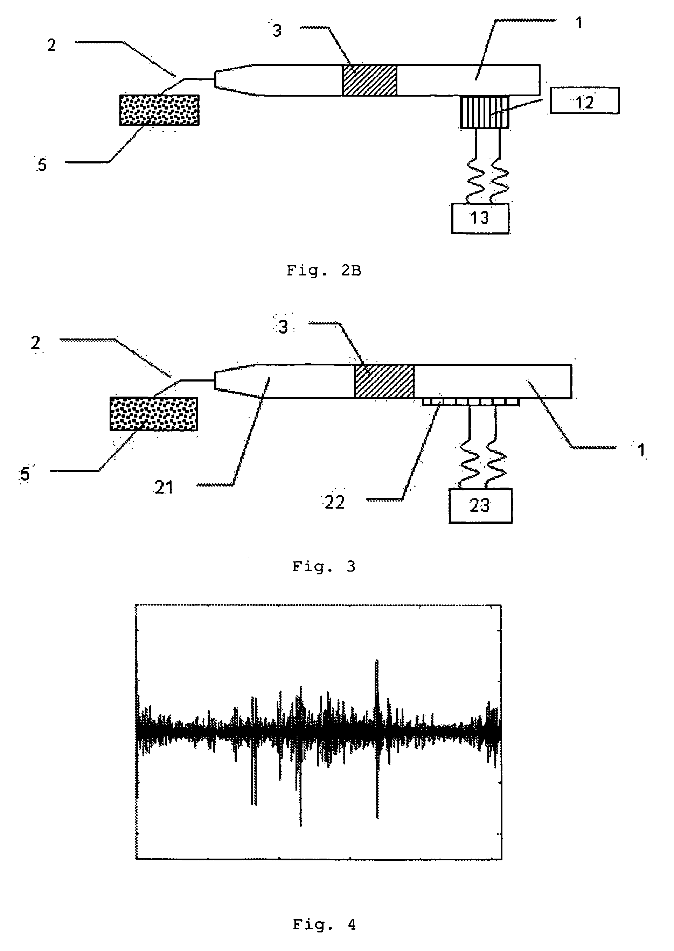

Die Piezokeramik 3 als Sensorelement ist mit einer Auswerteeinheit 7 verbunden, in welcher das von dem Sensorelement erzeugte Signal entweder im Zeitbereich und/oder im Frequenzbereich ausgewertet wird. Ausgewertet werden kann beispielsweise die Amplitude, die Frequenz, die Hüllkurve oder die Leistungsdichte des gewonnenen Signals. So ist die Spannungshöhe auf einer rauen Oberfläche deutlich höher als auf einer glatten Oberfläche. Das Signal kann beispielhaft die Form von Fig. 4 besitzen.

Die Auswerteeinheit 7 ist so ausgebildet, dass Schwingungen des Detektorelements 2, die bei Überstreichen der zu erkennenden Oberflächenstruktur des Zahns 5 auftreten, anhand im Sensorelement 3 erzeugten Signals ausgewertet werden können, ohne dass das Detektorelement 2 vom Handinstrument aus angeregt wird, d.h., dass die Schwingungen aufgrund der Bewegung des Detektorelements an der Oberfläche 6 entlang zur Signalerzeugung verwendet werden. Es ist jedoch auch möglich, eine geräteseitige Anregung vorzusehen.

Da die Piezokeramik 3 auch den Antrieb des Ultraschallscalers 1 darstellt und hierfür elektrisch angesteuert werden muss, ist eine Verbindung 8 mit einer elektrischen Steuerung bereits vorhanden.

Für den Fall, dass die Piezokeramik 3 als Sensorelement kein für eine Auswertung geeignetes Signal liefert, kann die Piezokeramik in einen Antriebsteil 3a und in einen Sensorteil 3b unterteilt sein, dargestellt in **Fig. 1B**. In diesem Fall ist eine weitere Verbindung 8' erforderlich. Durch die Verbindung 8' ist das eigentliche Sensorelement 7b teilweise elektrisch von dem Aktorelement 7b getrennt, so dass eine vereinfachte Auswertung verwendet werden kann, da der Hochspannungsteil des Antriebes von der Messung getrennt ist.

Im Ausführungsbeispiel gemäß **Fig. 2A** ist am zahnärztlichen Handinstrument 11 ein Sensorelement in Form eines Schwingungssensors 12 vorgesehen, der mit einer Auswerteeinheit 13 verbunden ist. Das Detektorelement 2 wird bei seiner Bewegung über den Zahn 5 in Schwingungen versetzt, welche sich über die Piezokeramik 3 und die Gegenmasse 4 auf den Schwingungssensor 12 übertragen und dort ein Signal hervorrufen, welches in der Auswerteeinheit 13 ausgewertet wird.

Der Schwingungssensor 12 ist der Piezokeramik 3 als Antrieb des als Arbeitsspitze 2 ausgebildeten Detektorelements im Falle einer Bearbeitung des Zahns 5 nachgeschaltet, wobei der Schwingungssensor 12 auch der Gegenmasse 4 nachgeschaltet ist. Der Schwingungssensor ist vorteilhaft in Längsrichtung des Handstücks angebracht, kann aber auch senkrecht dazu stehen (**Fig. 2B**).

In **Fig. 3** ist ein weiteres Ausführungsbeispiel der Erfindung dargestellt. Das zahnärztliche Handinstrument 21 umfasst eine Piezokeramik 3 als Antrieb für eine Arbeitsspitze 2, welche auch als Detektorelement verwendet werden kann, wobei die beim Überstreichen des Detektorelements 2 über den Zahn 5 hervorgerufenen Schwingungen in einem als Dehnungsmessstreifen ausgebildeten Sensorelement 22 erfasst werden und in einer Auswerteeinheit 23 ausgewertet werden.

Der Dehnungsmessstreifen erstreckt sich vorteilhafterweise über die Gegenmasse des Handstücks, kann aber auch an beliebigen anderen Stellen angebracht werden. Vorteilhafterweise findet eine Befestigung an den Stellen statt, an denen eine Auslenkung stattfindet und beispielsweise nicht über dem Bereich der Piezokeramiken, da sich an diesen Stellen ein Schwingungsknoten befindet.

In den Ausführungsbeispielen gemäß Fig. 2A, B und 3 werden demnach nicht die Signale aus der Piezokeramik erfasst, die Schwingungen werden vielmehr durch zusätzliche Sensorelemente erfasst und ausgewertet.

Wesentlich ist hierbei, dass es sich um ein passives Auswertesystem handelt, bei dem das Detektorelement keinerlei Anregung aus dem Handinstrument heraus erfährt.

**Fig. 4** zeigt den Verlauf eines aus dem Sensorelement gewonnenen Signals beim Überstreichen einer Oberfläche. Es wird der Spannungsverlauf über der Zeit dargestellt. An der Form der Spannungsanregungen können Rückschlüsse auf die überstrichene Oberfläche gezogen werden. Das Überstreichen der Oberfläche erzeugt einen unregelmäßigen Spannungsverlauf, der bei einer größeren Rauheit der Oberfläche zu größeren Spannungsamplituden führt.

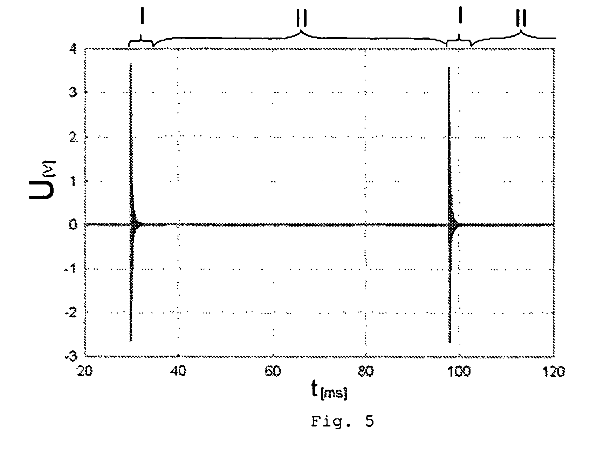

In **Fig. 5** ist ein Signal in Form eines zeitlichen Spannungsverlaufs dargestellt, das aus dem gleichzeitigen Überstreichen einer Oberfläche und einer regelmäßigen kurzzeitigen geräteseitigen Anregung der Oberfläche resultiert.

Die Zeitbereiche der regelmäßigen kurzzeitigen geräteseitigen Anregung sind in Fig. 5 mit "I" gekennzeichnet, die Bereiche ohne geräteseitige Anregung mit "II".

Die geräteseitige Anregung der Oberfläche führt im Spannungsverlauf zu Spannungsspitzen, deren Amplituden im Vergleich zu den Amplituden, die durch das Überstreichen der Oberfläche ohne geräteseitige Anregung erzeugt werden, wesentlich größer sind, üblicherweise mehr als der Faktor 10.

Die Auswertung eines solchen Signals wird getrennt für die beiden sich abwechselnden Bereiche I und II vorgenommen. In den Zeitabschnitten, in denen eine geräteseitige Anregung und die Antwort der Oberfläche auf diese Anregung das Signal überwiegen, werden andere Auswerteverfahren herangezogen als in den Bereichen, in denen nur Anregungen durch das Überstreichen der Oberfläche erzeugt werden.

Die Zeitabstände der geräteseitigen Anregungen betragen 65 ms, sodaß bei einer typischen Geschwindigkeit von etwa 3 cm/s, mit der das Detektorelement 2 über die Oberfläche geführt wird, eine Anregung der Oberfläche etwa alle 0,2 cm stattfindet.

## Patentansprüche

1. Verfahren zur Erkennung von dentalen Oberflächenstrukturen mittels eines Handinstruments (1), bei dem ein Detektorelement (2) über der zu erkennenden Oberfläche (6) eines Zahns (5) in Kontakt gebracht wird und bei dem ein Sensorelement (36, 12, 22) die Schwingungen des Detektorelements (2) erfasst, die anschließend ausgewertet werden, wobei das Detektorelement (2) geräteseitig mittels eines Schwingerregers (3,3a) angeregt wird, **dadurch gekennzeichnet, dass** das Detektorelement (2) über die zu erkennende Oberfläche (6) des Zahns (5) bewegt wird und dass die dabei entstehenden Schwingungen erfasst und die nicht durch die geräteseitige Anregung hervorgerufenen Schwingungen sowie gleichzeitig zusätzlich die durch die geräteseitige Anregung hervorgerufenen Schwingungen des Detektorelements (2) ausgewertet werden.

2. Verfahren nach Anspruch 1, **dadurch gekennzeichnet, dass** die geräteseitig hervorgerufenen Schwingungen in dem auszuwertenden Signal des Detektorelements (2) mindestens die 10-fache Amplitude gegenüber der Amplitude der nicht durch die geräteseitige Anregung hervorgerufenen Schwingungen aufweisen.

3. Verfahren nach einem der Ansprüche 1 bis 2, **dadurch gekennzeichnet, dass** das aus den Schwingungen gewonnene Signal im Zeitbereich und/oder im Frequenzbereich ausgewertet wird.

4. Verfahren nach einem der Ansprüche 1 bis 3, **dadurch gekennzeichnet, dass** ein piezokeramischer oder magnetostriktiver Schwingerreger (3a, 3) als Sensorelement und/oder Sensoren wie Schwingungsaufnehmer (12) oder Dehnungsmessstreifen (22) zur Erzeugung auswertbarer Signale verwendet werden.

## Claims

1. A method for the ascertainment of dental surface structures by means of a hand instrument (1), in which a detector element (2) is brought into contact with the surface to be recognized (6) of a tooth (5) and in which a sensor element (36, 12, 22) registers the oscillations of the detector element (2), which are then evaluated, and in which the detector element is excited on the equipment side by means of an oscillator (33a), **characterized in that** said detector element (2) is moved across said surface to be recognized (6) of said tooth (5) and that the resultant oscillations are registered and both the oscillations not caused by excitation on the equipment side and simultaneously the oscillations caused by excitation on the equipment side are evaluated in said detector element (2).

2. The method as defined in claim 1, **characterized in that** the equipment-side-specific oscillations in the signal to be evaluated in said detector element (2) have an amplitude that is at least ten times as large as that of the oscillations not caused by equipment side excitation.

3. The method as defined in claim 1 or claim 2, **characterized in that** the signal obtained from said oscillations is evaluated in the time domain and/or in the frequency domain.

4. The method as defined in any one of claims 1 to 3, **characterized in that** for the production of analyzable signals use is made of a piezoceramic or magnetostrictive oscillator (3a, 3) and/or of sensors, such as vibration sensors (12) or strain gages (22) as said sensor element.

## Revendications

1. Procédé de reconnaissance de structures de surface dentaires au moyen d'un instrument manuel (1), dans lequel un élément formant détecteur (2) est amené en contact au-dessus de la surface (6) à reconnaître d'une dent (5), et dans lequel un élément formant capteur (36, 12, 22) détecte les oscillations de l'élément formant détecteur (2) qui sont ensuite évaluées, l'élément formant détecteur (2) est excité côté appareil au moyen d'un générateur d'oscillations (3, 3a), **caractérisé en ce que** l'élément formant détecteur (2) est déplacé sur la surface (6) à reconnaître de la dent (5), et **en ce que** les oscillations ainsi créées sont détectées, et les oscillations qui ne sont pas provoquées par l'excitation côté appareil, ainsi qu'en même temps en plus les oscillations provoquées par l'excitation côté appareil de l'élément formant détecteur (2) sont évaluées.

2. Procédé selon la revendication 1, **caractérisé en ce que** les oscillations provoquées côté appareil dans le signal à évaluer de l'élément formant détecteur (2) présentent au moins dix fois l'amplitude par rapport à l'amplitude des oscillations non provoquées par l'excitation côté appareil.

3. Procédé selon l'une quelconque des revendications 1 à 2, **caractérisé en ce que** le signal obtenu à partir des oscillations est évalué dans le domaine temporel et/ou dans le domaine fréquentiel.

4. Procédé selon l'une quelconque des revendications 1 à 3, **caractérisé en ce qu'**un générateur d'oscillations (3a, 3) piézocéramique ou magnétostrictif en tant qu'élément formant capteur et/ou capteurs, tels que des capteurs d'oscillations (12) ou des extensomètres (22), est utilisé pour générer des signaux pouvant être évalués.
